Europäisches Patentamt

European Patent Office

Office européen des brevets

(11) Publication number: **0 089 128**
**B1**

# (12) EUROPEAN PATENT SPECIFICATION

(45) Date of publication of patent specification: **07.05.86**

(21) Application number: **83300917.8**

(22) Date of filing: **22.02.83**

(51) Int. Cl.⁴: **B 01 D 19/00, E 21 B 43/20**

(54) **Process for displacing dissolved gas from water.**

(30) Priority: **12.03.82 GB 8207246**

(43) Date of publication of application:
**21.09.83 Bulletin 83/38**

(45) Publication of the grant of the patent:
**07.05.86 Bulletin 86/19**

(84) Designated Contracting States:
**CH DE FR GB LI NL SE**

(56) References cited:
**EP-A-0 002 568**
**EP-A-0 023 745**
**EP-A-0 047 085**
**DE-A-1 519 627**
**GB-A-2 008 971**
**US-A-2 507 797**
**US-A-4 044 831**
**US-A-4 113 452**

(73) Proprietor: **IMPERIAL CHEMICAL INDUSTRIES PLC**
**Imperial Chemical House Millbank**
**London SW1P 3JF (GB)**

(72) Inventor: **Smith, Leslie McLeod**
**15 Gander Hill**
**Haywards Heath West Sussex RH16 1QU (GB)**
Inventor: **Ramshaw, Colin**
**4 The Spinney**
**Norley Cheshire (GB)**

(74) Representative: **Thomas, Ieuan et al**
**Imperial Chemical Industries PLC Legal**
**Department: Patents PO Box 6**
**Welwyn Garden City Herts, AL7 1HD (GB)**

Courier Press, Leamington Spa, England.

## Description

This invention is a process for injecting water into an oil well which includes the step of deaerating the water before injection.

For many industrial purposes, water is required to be as free as possible of dissolved gases, especially oxygen. For others, while dissolved oxygen cannot be tolerated, another dissolved gas, such as methane, nitrogen or carbon dioxide, is acceptable.

Where water is used for injection into oil-bearing formations to enhance production of oil from wells, it is necessary that oxygen be absent from the water, as otherwise bacterial growth in the rock pores is encouraged and the pores may become blocked and oil displacement inhibited. However other gases, for example gaseous hydrocarbons, can be readily tolerated in the water.

To achieve oxygen removal, a range of designs of so-called "deaerators" or "degasifiers" have been developed. These devices are static devices in which either the water is exposed to reduced pressure or a displacing gas is passed through the water at atmospheric, reduced or elevated pressure.

The large volumes of water which are treated in these ways entail large vessels and ancillary equipment and represent considerable investment of capital. There is therefore a great incentive to devise ways of reducing the size of the vessels involved. In addition, where the water treatment is to be carried out off-shore, for example in deaerating injection water for off-shore wells, any way of reducing the volume and/or weight of the treatment unit is a highly desirable end.

We have now devised a process for injecting water into an oil well which includes the step of displacing dissolved air or oxygen from water, which entails more compact equipment than has hitherto been used. Our process comprises carrying out the displacing by contacting the water with a gas which is produced from the well itself in a rotor having a surface area of at least 30 $m^2/m^3$ and rotating at such a speed as to subject the water to an acceleration, expressed in a direction radial with respect to the axis of rotation, which is greater than the acceleration due to gravity. The gas, may if desired be a vapour.

The manner in which the process of the present invention is operated depends upon the specific requirement of each situation. More specifically, it depends upon the nature of the water available, the characteristics required of the water produced and the availability of a gas to displace the dissolved oxygen or air.

In preparing water for injection into oil wells, the displacing of other gases than oxygen is not important. Thus it is possible and very convenient to employ as the displacing gas any gaseous product which is co-produced with the oil. In practice, this may be a gaseous hydrocarbon such as methane and/or ethane, or in appropriate situations carbon dioxide or nitrogen. When the oil well is an on-shore well, the feed-water is likely to be raw river water or mains water from some similar fresh-water source or possibly water produced from a well drilled specifically for the purpose. On shore, the displacing gas may be natural gas from the well itself, or coproduced nitrogen and/or carbon dioxide. With an off-shore well, the most convenient source of water for injection is sea-water and the most convenient displacing gas will be coproduced natural hydrocarbon gas. If desired, the water after deaeration may be mixed with water co-produced in the well before it is injected into the oil-bearing formation although in general it is preferred not to inject co-produced water since such water normally requires some form of treatment, e.g. fine filtration, before it is suitable for use in this way.

With conventional deaeration of water, an oxygen scavenger is often added to the deaerated water or to the water during deaeration in order to remove as much as possible of the residual oxygen. Thus sea-water which initially contained a few ppm of oxygen, say 10 ppm, and which has been conventionally deaerated to a value of say 0.5 ppm, may be treated with an oxygen scavenger in order to lower further the oxygen concentration. It is believed that, using the method of the present invention, it may well be economical to deaerate by physical methods to an oxygen concentration level which is already acceptable, thus avoiding the need of a chemical scavenger in many situations.

The specific surface area of the high surface area rotor used in the process of the present invention is at least 30 $m^2/m^3$, for example 100 to 500 $m^2/m^3$, and may advantageously be greater than 1,000 $m^2/m^3$, especially greater than 1,500 $m^2/m^3$.

The rotor may take any of a variety of forms. For example, we have described such rotors in European Patent Specification Nos. 0,002,568, 0,020,055 and 0,023,745.

The rotor may consist of a plurality of axially-spaced discs in generally parallel alignment, for example each lying at right angles to the axis of rotation of the rotor. The discs may be self-supporting or supported. Conveniently the discs may be of a metal chosen taking into account the particular application envisaged. Typically, such discs may be of the order of 0.05 to 2.0 mm, especially 0.25 to 1.0 mm, thickness and may be spaced about 0.5 to 5 mm, especially 0.5 to 2 mm, apart.

Another suitable form of rotor consists of a plurality of plates, generally radially disposed in planes parallel to the axis of rotation or disposed at an angle to such planes and/or to the radius. Typically, such plates may be of the order of 0.05 to 2.0 mm, especially 0.25 to 1.0 mm, thickness and may be spaced apart by a distance of the order of 0.5 to 5 mm, especially 0.5 to 2 mm, at their nearest points, which distance may vary with distance from the axis of rotation.

A further form of rotor comprises a permeable element, which may be of unitary construction or assembled, if desired *in situ*, from a plurality of parts or layers. Thus the element may be of knitted or woven cloth, for example metal cloth; a crumpled mesh; a random or ordered mat or other mass of fibres, for example metallic fibres, which may if desired be strengthened by sintering or adhesive bonding; a sintered mass of metal particles; or a reticulated foam. Specific examples of suitable materials include knitted metal cloth, for example that sold under the trade mark "Knitmesh", which may for example be wound in layers about a support which surrounds or is located at the axis of rotation of the rotor, and metallic skeletal foams, for example the product sold under the trade mark "Retimet", which may conveniently be assembled in layers to form the permeable element.

The rotor is rotated at such a speed as to subject the water to an acceleration, expressed in a radial direction, which is greater than the acceleration due to gravity. Since the radial acceleration to which the solution is subjected varies with the distance from the axis of rotation, it is convenient to refer to the mean acceleration $(a_m)$, which is defined by the equation:

$$a_m = \left(2\pi\frac{N}{60}\right)^2 \left(\frac{r_o{}^2 + r_1{}^2}{2}\right)^{1/2}$$

where N is the rotational speed of the rotor in revolutions per minute, $r_o$ is the distance from the axis of the radially innermost part of the high surface area rotor and $r_1$ is the distance from the axis of the radially outermost part of said rotor. The mean acceleration to which the water is subjected is preferably at least 300 m sec$^{-2}$, especially at least 1,000 m sec$^{-2}$, and may advantageously be as high as 10,000 m sec$^{-2}$ or higher. Thus, in terms of the acceleration due to gravity (g), the mean acceleration may amount to 30 g or 100 g or 1,000 g or more.

The rotational speed at which it is necessary to rotate the rotor in order to achieve acceleration values which are a multiple of that due to gravity is, as is clear from the above equation, dependent only upon reactor dimensions and upon the degree of acceleration selected. Thus with a rotor having an inner radius of 0.15 m and an outer radius of 0.25 m. If it is desired to subject the water to a mean radial acceleration of 700 m sec$^{-2}$, it is necessary to rotate the rotor at about 550 revs/min. If the acceleration is to be about 1,000 m sec$^{-2}$, then the rotational speed must be of the order of 650 revs/min. In general, it is likely that the rotational speed of the rotor employed in the process of the present invention will lie between 50 and 10,000 revs/min, for example between 100 and 5,000 revs/min and preferably between 500 and 2,000 revs/min.

The rotor is constructed of any material which combines the characteristics of mechanical strength and corrosion resistance required by the intended conditions of use. Thus for treatment of fresh water, the required characteristics may be met by the use of one of the stainless steels conventionally used in static deaeration equipment. For sea-water deaeration, one of the copper-based marine alloys, for example an admiralty alloy or a cupro-nickel alloy, may be used. Also for sea-water, titanium metal is very suitable, as is an alloy of nickel and chromium. In some conditions of use, especially where long exposures to still sea-water are not contemplated, some of the stainless steels, such as the 316 type containing chromium, nickel and molybdenum, are suitable.

The invention will now be further described by reference to the accompanying drawings, in which

Fig. 1 illustrates, in vertical section, one form of apparatus suitable for practising the process according to the present invention; and

Fig. 2 illustrates, also in vertical section, another form of suitable apparatus.

In the two figures, the same reference numerals are used for corresponding parts. Full-line arrows indicate liquid flow and broken-line arrows indicate gas flow.

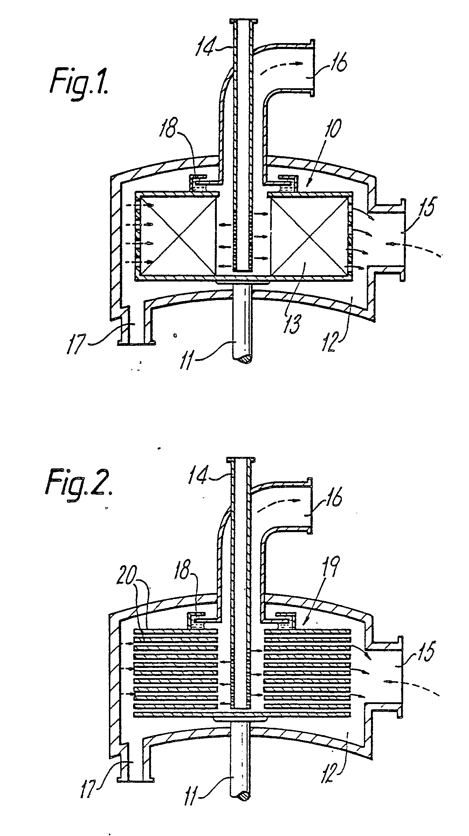

Referring firstly to Fig. 1, a rotor 10 is mounted upon a shaft 11 by means of which it is rotated within a squat cylindrical chamber 12. The rotor 10 carries an annular permeable member 13, assembled from concentric layers of the metallic skeletal foam sold under the trade mark "Retimet". The member 13 in the illustrated embodiment is of a nickel-chromium alloy and has a specific surface area of 2,600 m$^2$/m$^3$.

Water containing 9 ppm of dissolved oxygen is introduced via water feed pipe 14 and in turn via apertures near the lower end of the pipe 14 to the inner cylindrical face of the permeable member 13, whence it permeates, under the centrifugal effect of the rotation of the rotor 10, through the pores of the member 13 towards its outer face. Within the member 13, the water is subjected to a mean centrifugal acceleration of approximately 50 times the acceleration due to gravity.

A gas mixture containing 85 per cent by weight of methane and 15 per cent by weight of ethane is introduced to the chamber 12 via gas feed pipe 15 under sufficient pressure to cause it to enter the member 13 via its outer cylindrical face. The gas flows in a generally inward direction through the pores of the permeable member 13, countercurrent to the flow of water. Within the pores, the gas/liquid contact takes place by means of which oxygen is transferred from the water to the gas phase. The gas emerges from the inner face of the member 13 and is removed via gas discharge pipe 16. "Deaerated" water (containing 0.1 ppm of oxygen) leaves the member 13 via its outer face and is withdrawn from chamber 12 via liquid discharge pipe 17.

In order to maintain the small positive gas pressure in the chamber 12, a liquid seal 18 surrounds the lower end of the pipe 16 and a liquid lute (not shown) is included in the liquid line from pipe 17.

The apparatus illustrated in Fig. 2 differs from that of Fig. 1 in that it has a rotor 19 in the form of a stack of axially-spaced plates 20. In the drawing, for the sake of clarity, only a few plates are shown; however the plates 20 in the illustrated embodiment are in fact 0.5 mm thick and spaced 1 mm apart. Thus in a stack of plates of, say 80 mm total axial length there are 54 plates. The specific surface area of the stack is therefore approximately 1,350 m²/m³.

The apparatus of Fig. 2 operates in substantially the same manner as that of Fig. 1, except that the gas/water contact takes place upon the surfaces of the plates 20 and to some extent in the space between the plates.

## Claims

1. A process for injecting water into an oil well which process comprises the step of deaerating the water by exposing it to a displacing gas characterised in that
(a) the deaerating step is carried out in a rotor which has a specific surface area of at least 30 metres²/metres³ rotating at such a speed that the water is subjected to an acceleration, expressed in a direction which is radial with respect to the axis of the rotation, which is greater than the acceleration due to gravity and
(b) the displacing gas is produced from the well itself.

2. A process as claimed in claim 1 wherein the gas is a gaseous hydrocarbon.

3. A process according to claim 2 characterised in that the gaseous hydrocarbon is methane and/or ethane.

4. A process according to any preceding claim, characterised in that the water is subsequently treated with a chemical scavenger for oxygen.

5. A process according to any preceding claim, characterised in that said acceleration is at least 300 metres/sec/sec.

6. A process according to any preceding claim, characterised in that said rotor has a specific surface area greater than 1000 metres²/metre³.

7. A process according to claim 6, characterised in that said rotor consists of a plurality of axially-spaced discs in generally parallel alignment.

8. A process according to claim 6, characterised in that said rotor consists of a plurality of generally radially disposed plates.

9. A process according to claim 6, characterised in that said rotor comprises a permeable element.

10. A process according to claim 9, characterised in that said permeable element is of a knitted or woven cloth, a crumpled mesh, a random or ordered mat or other mass of fibres, a sintered mass of metal particles or a reticulated foam.

11. A process according to claim 10, characterised in that said permeable element is of a knitted metal cloth or a metallic skeletal foam.

12. A process according to any preceding claim, characterised in that it is carried out off-shore.

## Patentansprüche

1. Verfahren zum Einpressen von Wasser in ein Erdölbohrloch, wobei dieses Verfahren einen Schritt enthält, in dem das Wasser dadurch entlüftet wird, daß es einem Verdrängungsgas ausgesetzt wird, dadurch gekennzeichnet, daß
(a) der Entlüftungschritt in einem Rotor durchgeführt wird, der eine spezifische Oberfläche von mindestens 30 m²/m³ hat und mit einer derartigen Geschwindigkeit umläuft, daß das Wasser in einer zu der Rotationsachse radial verlaufenden Richtung einer Beschleunigung ausgesetzt wird, die größer als die Gravitationsbeschleunigung ist, und
(b) das Verdrängungsgas aus dem Bohrloch selbst erzeugt wird.

2. Verfahren nach Anspruch 1, bei dem das Gas ein gasförmiger Kohlenwasserstoff ist.

3. Verfahren nach Anspruch 2, dadurch gekennzeichnet, daß der gasförmige Kohlenwasserstoff Methan und/oder Ethan ist.

4. Verfahren nach einem der vorhergehenden Ansprüche, dadurch gekennzeichnet, daß das Wasser danach mit einem chemischen Mittel zum Binden von Sauerstoff behandelt wird.

5. Verfahren nach einem der vorhergehenden Ansprüche, dadurch gekennzeichnet, daß die erwähnte Beschleunigung mindestens 300 m/s² beträgt.

6. Verfahren nach einem der vorhergehenden Ansprüche, dadurch gekennzeichnet, daß der Rotor eine spezifische Oberfläche von mehr als 1000 m²/m³ hat.

7. Verfahren nach Anspruch 6, dadurch gekennzeichnet, daß der Rotor aus einer Vielzahl von Scheiben besteht, die mit Abstand in der Achsenrichtung angeordnet und im wesentlichen parallel ausgerichtet sind.

8. Verfahren nach Anspruch 6, dadurch gekennzeichnet, daß der Rotor aus einer Vielzahl von im allgemeinen radial angeordneten Scheiben besteht.

9. Verfahren nach Anspruch 6, dadurch gekennzeichnet, daß der Rotor ein durchlässiges Bauteil enthält.

10. Verfahren nach Anspruch 9, dadurch gekennzeichnet, daß das durchlässige Bauteil aus einem gestrickten bzw. gewirkten Tuch oder einem Gewebe, einem zerknitterten bzw. spiralenförmig gewundenen Netzwerk bzw. Geflecht, einer (einem) ungeordneten oder geordneten Matte (Vlies) oder anderen Fasermasse, einer Sintermasse aus Metallteilchen oder einem netzförmigen Schaum besteht.

11. Verfahren nach Anspruch 10, dadurch gekennzeichnet, daß das durchlässige Bauteil aus einem gestrickten bzw. gewirkten Metalltuch oder einem metallischen Gerüstschaum besteht.

12. Verfahren nach einem der vorhergehenden Ansprüche, dadurch gekennzeichnet, daß es im Schelfgebiet durchgeführt wird.

## Revendications

1. Procédé pour injecter de l'eau dans un puits de pétrole, lequel procédé comprend l'étape qui consiste à désaérer l'eau en l'exposant à un gaz de chasse, caractérisé en ce que

(a) l'étape de désaération est effectuée dans un rotor ayant une surface spécifique d'au moins 30 $m^2/m^3$, tournant à une vitesse telle que l'eau est soumise à une accélération exprimée dans une direction qui est radiale par rapport à l'axe de rotation, supérieure à l'accélération de la pesanteur, et

(b) le gaz de chasse est produit à partir du puits lui-même.

2. Procédé selon la revendication 1, dans lequel le gaz est un hydrocarbure gazeux.

3. Procédé selon la revendication 2, caractérisé en ce que l'hydrocarbure gazeux est du méthane et/ou de l'éthane.

4. Procédé selon l'une quelconque des revendications précédentes, caractérisé en ce que l'eau est ensuite traitée avec un balayeur chimique d'oxygène.

5. Procédé selon l'une quelconque des revendications précédentes, caractérisé en ce que ladite accélération est d'au moins 300 m/s/s.

6. Procédé selon l'une quelconque des revendications précédentes, caractérisé en ce que ledit rotor présente une surface spécifique supérieure à 1000 $m^2/m^3$.

7. Procédé selon la revendication 6, caractérisé en ce que ledit rotor comprend plusieurs disques espacés axialement en alignement globalement parallèle.

8. Procédé selon la revendication 6, caractérisé en ce que ledit rotor comprend plusieurs plaques disposées à peu près radialement.

9. Procédé selon la revendication 6, caractérisé en ce que ledit rotor comprend un élément perméable.

10. Procédé selon la revendication 9, caractérisé en ce que ledit élément perméable est une étoffe tricotée ou tissée, un tamis froissé, un mat ou autre masse de fibres aléatoire ou ordonnée, une masse frittée, de particules métalliques ou une mousse réticulée.

11. Procédé selon la revendication 10, caractérisé en ce que ledit élément perméable est une étoffe métallique tricotée ou une mousse à squelette métallique.

12. Procédé selon l'une quelconque des revendications précédentes, caractérisé en ce qu'il est mis en oeuvre en mer.

0 089 128

Fig.1.

Fig.2.